# EUROPÄISCHE PATENTSCHRIFT

(11) **EP 2 839 560 B1**
(45) Veröffentlichungstag und Bekanntmachung des Hinweises auf die Patenterteilung: **30.08.2017**
(21) Anmeldenummer: 13708688.0
(22) Anmeldetag: 06.03.2013
(51) Int. Cl.: H02G 3/08, F04D 13/06

(54) **MOTORKREISELPUMPE MIT ANSCHLUSSKASTEN**
MOTOR CENTRIFUGAL PUMP HAVING JUNCTION BOX
POMPE CENTRIFUGE À MOTEUR DOTÉE DE BOÎTES DE JONCTION

(30) Priorität: 20.04.2012 DE 102012007962
(43) Veröffentlichungstag der Anmeldung: 25.02.2015
(73) Patentinhaber: WILO SE, 44263 Dortmund (DE)
(72) Erfinder: KARNS, Stephan, 59348 Lüdinghausen (DE); HUNNEKUHL, Gerhard, 58452 Witten (DE)
(74) Vertreter: Cohausz Hannig Borkowski Wißgott
(86) Internationale Anmeldenummer: PCT/EP2013/000644
(87) Internationale Veröffentlichungsnummer: WO 2013/156099

(56) Entgegenhaltungen:
- EP-A1- 0 447 869
- EP-A1- 0 735 273
- EP-A1- 1 452 739
- JP-A- 2011 117 378

## Beschreibung

Die Erfindung betrifft eine Motorkreiselpumpe mit einem elektronische Bauteile aufweisenden, am Motor befestigten Anschlusskasten, zu dem elektrische Kabel führen.

Es ist bekannt, an dem Elektronikgehäuse (Klemmenkasten) einer Motorkreiselpumpe den Stecker eines Stromversorgungskabels zu befestigen. Soll die Elektronik zusätzlich mit einem Signalkabel verbunden werden, so muss eine Kontaktierung des Signalkabels zudem vorgenommen werden. Das Befestigen und Konstruieren der Kabel an der Pumpe bedeutet für den Monteur nicht unerhebliche Arbeiten, die bei einer schwer zugänglichen Pumpe nicht leicht durchführbar sind. Aus der EP 1 452 739 ist es an sich bekannt, an dem Klemmenkasten einer Pumpe einen Stecker anzustecken, um eine Anschlussleitung zu befestigen. Der Stecker bildet aber keinen inneren Klemmraum, um dort zwei oder mehr Kabel anzuschließen , sondern ist lediglich für eine einzige elektrische Anschlussleitung vorgesehen. Aus der EP 0 447 869 A1 ist eine elektrische Verbindung zwischen zwei Adern mittels Schneid-Klemmtechnik in einem Gehäuse bekannt, wobei die Verbindung dadurch erfolgt, dass zwei Hälften des Gehäuses ineinander gedrückt werden. Einen Stecker offenbart diese Schrift nicht. Aufgabe der Erfindung ist es, bei einer Pumpe der eingangs genannten Art die Anschlussarbeiten und damit das Befestigen und Kontaktieren der Kabel zu erleichtern und sichere Verbindungen zu schaffen, insbesondere bei einer schwer zugänglichen Pumpe. Am Anschlusskasten ist daher ein kastenförmiger Stecker lösbar angesteckt der einen inneren Klemmraum bildet, in dem die elektrischen Kabel hineingeführt und angeschlossen sind. Hierdurch wird es dem Monteur ermöglicht, in Entfernung von der montierten Pumpe die Leitungen im Stecker zu befestigen und danach den vormontierten Stecker am die Elektronik aufweisenden Pumpenanschlusskasten anzustecken, ohne dann noch einzelne Leiterkontaktierungen vornehmen zu müssen. Dies führt bei einfacher Konstruktion zu einer geringeren und leichteren Arbeit und einer sicheren Kontaktierung.

Eine geschützte und sichere Lage des Steckers ist dann gegeben, wenn der Stecker innerhalb des Anschlusskastens teilweise oder vollständig einliegt. Hierbei kann der Stecker vom Anschlusskasten teilweise oder vollständig umschlossen sein. Erfindungsgemäß ist am Stecker ein Stromversorgungskabel und ein Signale übertragendes Signalkabel als Steuerleitung angeschlossen und im Innenraum des Steckers mindestens ein separater Kontaktblock eingesetzt, an dem Leiter der Kabel kontaktierend befestigt sind.

Der Stecker hat damit mehrere Funktionen:
- Aufnahme der insbesondere zwei Anschlusskabel
- Zugentlastung der Kabel
- Trennung von Netz- und Signalleitungen
- Kontaktierung der Netz- und Signalleitungen
- direkte Kontaktierung auf der Elektronikplatine durch integrierten Kontaktblock im Stecker.

Besonders vorteilhaft ist hierbei, wenn der Kontaktblock eine vorstehende insbesondere angeformte Steckleiste aufweist, die bei eingestecktem Stecker mit seinen Kontakten Gegenkontakte der Elektronikplatine des Anschlusskastens kontaktiert. Hierzu steht die Steckleiste an der Unterseite des Steckers vor, um bei am Anschlusskasten befestigtem Stecker in den Anschlusskasten einzudringen. Vorzugsweise ist der Kontaktblock in achsparalleler Richtung zur Motorenachse in dem Stecker eingesteckt.

Auch wird vorgeschlagen, dass der Stecker in achsparalleler Richtung zur Motorenachse in den Anschlusskasten eingesteckt ist. Von Vorteil ist, wenn der Stecker formschlüssig im Anschlusskasten einliegt. Dabei kann der Stecker mit mindestens 50 Prozent seines Volumens innerhalb des Anschlusskastens insbesondere formschlüssig einliegen.

Eine besonders sichere Kontaktierung des Steckers im Anschlusskasten wird erreicht, wenn der Stecker gegen den Druck eines Federelementes in den Anschlusskasten bis zur Kontaktstellung eingeschoben und in der Kontaktstellung durch ein Halteelement gehalten ist. Hierbei kann das Halteelement eine Schraube und/oder ein lösbares Rastelement sein. Eine Kontaktierung ist somit nur gegeben, wenn die Schraube angezogen ist. Hierbei kann ein zusätzlich integriertes Federsystem den Stecker gegen die Kontaktierungsrichtung drücken.

Zur Absicherung wird vorgeschlagen, dass der Innenraum des Steckers von einem Deckel verschlossen ist, durch den die den Anschlussstecker am Anschlusskasten haltende Schraube verläuft. Auch wird hierzu vorgeschlagen, dass die Kabel am Stecker jeweils durch eine Klemmeinrichtung zugfest gehalten sind.

Die Kabel sind am Stecker sicher gehalten, wenn die Kabelenden mit ihrem Kabelmantel jeweils in einem am Stecker angeformten hohlen Anschlussstutzen einliegen, wobei über dem Anschlussstutzen eine Überwurfmutter liegt, die außen auf dem Kabelmantel eine Klemmkraft ausübt. Dabei ist von Vorteil, wenn auf dem Kabelmantel ein koaxialer Klemmring liegt, der Klemmnocken, Klemmfinger oder Klemmkrallen aufweist und durch die Überwurfmutter gegen einen im Anschlussstutzen befindlichen Innenkonus bewegt wird, um die Klemmnocken, Klemmfinger oder Klemmkrallen gegen den Kabelmantel zu drücken.

Die Montage wird noch dadurch erleichtert, wenn der Stecker entlang einer Trennebene in einen oberen und einen unteren Bereich insbesondere zwei Hälften geteilt ist, wobei der untere Bereich den Anschlusskasten insbesondere mit zwei Hälften geteilt ist, wobei der untere Bereich den Anschlusskasten insbesondere mit seinem/seinen Kontrollblock/Kontaktblöcken kontaktiert. Hierbei kann die Trennebene mittig durch die Anschlussstutzen derart verlaufen, dass die Stutzenachsen in der Trennebene liegen. Ferner ist von Vorteil, wenn die obere Hälfte des Steckers an der unteren Hälfte angelenkt ist, wobei die Gelenkstelle auf der dem Anschlußstutzen abgewandten Seite des Steckers liegt.

Eine besonders sichere Kontaktierung ist gegeben wenn, die die beiden Steckerhälften durchdringende Schraube nach unten über die Unterseite des unteren Bereits hinaussteht und in eine Gewindebohrung des Anschlusskastens eindringt, wobei im in der Gewindebohrung eingeschraubtem Zustand die Kontakte des Steckers und/oder des Kontaktblockes/der Kontaktblöcke mit den Gegenkontakten des Anschlusskastens kontaktieren.

Zwei Ausführungsbeispiele der Erfindung sind in den Zeichnungen dargestellt und werden im Folgenden näher beschrieben. Es zeigen
- Figur 1: ein erstes Ausführungsbeispiel von Anschlusskasten und Stecker im auseinander genommenen Zustand,

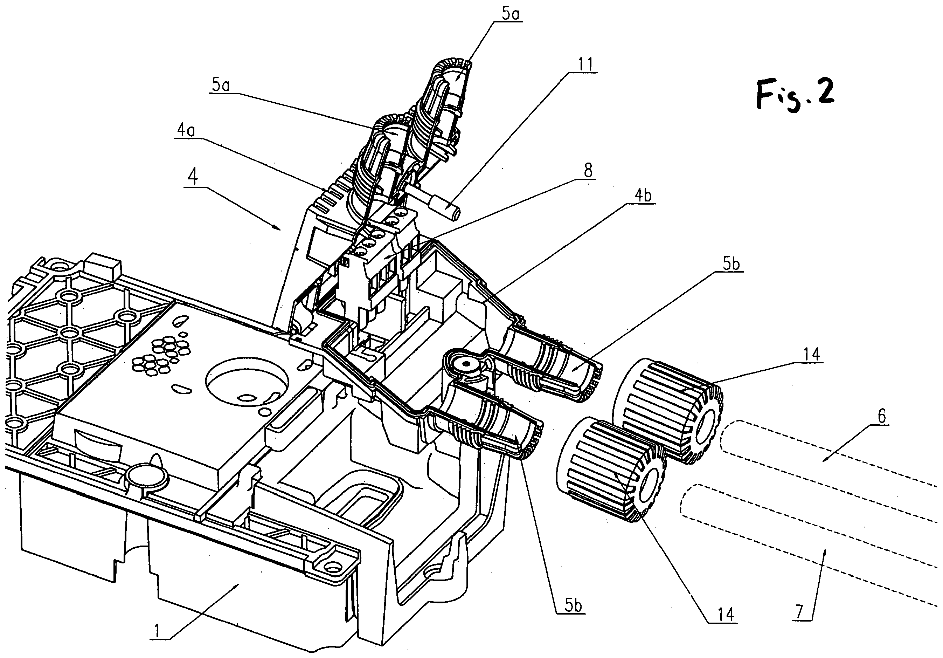

- Figur 2: ein zweites Ausführungsbeispiel.

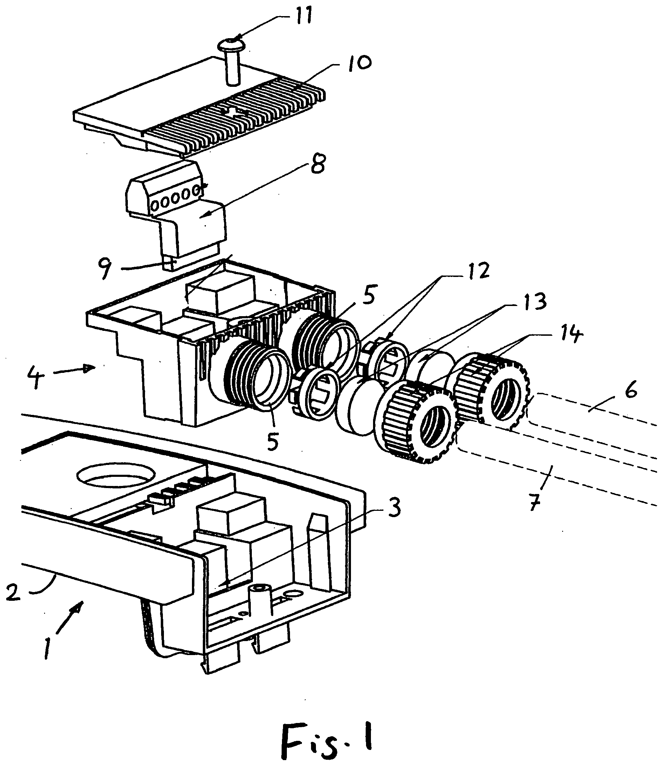

Nach Figur 1 ist auf der vorderen, dem Pumpengehäuse abgewandten Stirnseite eines Pumpenmotors ein Anschlusskasten (Klemmenkasten) 1 aus Kunststoff derart befestigt insbesondere angeschweißt, dass die Unterseite 2 des Anschlusskastens 1 an der Motorenstirnseite des nicht dargestellten Elektromotors (insbesondere einer Kreiselmotorpumpe) anliegt. Hierbei sind die elektrischen Verbindungen der elektronischen und elektrischen Bauteile des Anschlusskastens 1 mit dem Elektromotor in der Zeichnung nicht dargestellt.

Im Innenraum 3 des Anschlusskastens 1 ist ein kastenförmiger Stecker mit Klemmraum (Klemmkammer, Klemmbox, Klemmkasten) aus Kunststoff formschlüssig achsparallel zur Motorenachse eingesteckt, an dem zwei zueinander parallel angeordnete Anschlussstutzen 5 außen an der Vorderseite vorstehen, von denen einer das Stromversorgungskabel 6 und der andere das mit der Anschlusskastenelektronik verbundene Signalkabel 7 aufnimmt. Der Stecker 4 liegt mit mindestens 50 Prozent seines Volumens innerhalb des Anschlusskastens 1 insbesondere formschlüssig ein.

Im Stecker 4 ist achsparallel zur Motorenachse mindestens ein Kontaktblock 8 insbesondere aus Kunststoff eingesteckt, an dem auf der dem Motor zugewandten Seite eine angeformte Steckleiste 9 vorsteht, die durch eine Öffnung im Boden des Steckers 4 hindurchragt und in den Innenraum 3 des Anschlusskastens 1 so weit hineinragt, dass die Steckleiste mit ihren Kontakten die Gegenkontakte der Elektronikplatine des Anschlusskastens 1 kontaktiert. Hierbei sind die leitenden Litzen beider Kabel 6, 7 am Kontaktblock 8 elektrisch angeschlossen.

Der Stecker 4 ist im eingestecktem Zustand durch eine Schraube 11 gehalten, die durch einen oberen Deckel 10 und den Stecker 4 verläuft und über die Unterseite des Steckers 4 hinausragt, um mit ihrem unteren Ende in eine Gewindebohrung des Anschlusskastens 1 hineinzureichen und durch einen Sicherungsring gehalten zu sein. Durch ein Anziehen der Schraube 11 wird sichergestellt, dass eine Kontaktierung im Anschlusskasten 1 erfolgt.

In einer Ausführung überwindet der Stecker 4 bei seinem Eindrücken in den Innenraum 3 des Anschlusskastens 1 eine Druckfeder, die durch das Eindrücken gespannt wird. Der Stecker 4 wird hierbei im einliegenden Zustand durch ein Haltemittel gegen den Federdruck festgehalten, das eine Schraube oder ein lösbares Rastelement ist. Wird das Haltemittel gelöst, so drückt die Feder den Stecker 4 aus dem Anschlusskasten 1 heraus.

Nach dem Einstecken des Steckers 4 wird der Innenraum 3 des Anschlusskastens 1 durch einen Deckel 10 verschlossen, der durch eine Schraube 11 am Stecker 4 oder am Anschlusskasten 1 gehalten ist.

In den Anschlussstutzen 5 ist jedes Kabelende der Kabel 6, 7 durch einen Klemmring 12 zur Zugentlastung geführt, der über eine Dichtung 13 und eine Überwurfmutter 14 druckbelastet ist, die auf das freie Ende des Anschlussstutzens 5 aufgeschraubt ist. Der Klemmring weist Klemmnocken, Klemmfinger oder Klemmkrallen auf und wird durch die Überwurfmutter gegen einen im Anschlussstutzen 5 befindlichen Innenkonus bewegt, um die Klemmnocken, Klemmfinger oder Klemmkrallen gegen den Kabelmantel zu drücken. Alternativ sind diese Klemmteile in dem unteren und oberen Bereich 4a, 4b integriert, die im Folgenden beschrieben werden.

In einer weiteren Ausführung ist der Stecker 4 in einen oberen 4a und unteren Bereich 4b (bzw. Steckeroberteil 4a, Steckerunterteil 4b) geteilt, wobei die Trennebene im Wesentlichen waagerecht und mittig durch die Anschlussstutzen 5 verläuft. Damit erübrigt sich der Deckel 10 und der obere Bereich 4a ist am unteren Bereich 4b durch mindestens eine Schraube befestigt. Hierbei sind die beiden Bereiche bzw. Teile 4a, 4b aneinander angelenkt, wobei die Gelenkstelle auf der Rückseite des Steckers 4 liegt.

## Patentansprüche

1. Motorkreiselpumpe mit einem elektronische Bauteile aufweisenden, am Motor befestigten Anschlusskasten (1), zu dem elektrische Kabel (6,7) führen, wobei am Anschlusskasten (11) ein kastenförmiger Stecker (4) lösbar angesteckt ist, der einen inneren Klemmraum bildet, in dem die elektrischen Kabel (6) hineingeführt und angeschiossen sind und am Stecker (4) ein Stromversorgungskabel (6) und ein Signale übertragendes Signalkabel (7) als Steuerleitung angeschlossen sind, **dadurch gekennzeichnet dass** im Klemmraum des Steckers (4) mindestens ein separater Kontaktblock (8) eingesetzt ist, an dem Leiter der Stromversorgungskabel (6) und der Signalkabel (7) kontaktierend befestigt sind.

2. Motorkreiselpumpe nach Anspruch 1, **dadurch gekennzeichnet, dass** der Stecker (4) innerhalb des Anschlusskastens (1) teilweise oder vollständig einliegt.

3. Motorkreiselpumpe nach Anspruch 2, **dadurch gekennzeichnet, dass** der Stecker (4) vom Anschlusskasten (1) teilweise oder vollständig umschlossen ist.

4. Motorkreiselpumpe nach einem der vorherigen Ansprüche, **dadurch gekennzeichnet, dass** der Kontaktblock (8) eine vorstehende insbesondere angeformte Steckleiste (9) aufweist, die bei angestecktem Stecker (4) mit seinen Kontakten Gegenkontakte der Elektronikplatine des Anschlusskastens (1) kontaktiert.

5. Motorkreiselpumpe nach Anspruch 4, **dadurch gekennzeichnet, dass** die Steckleiste an der Unterseite des Steckers (4) vorsteht, um bei am Anschlusskasten (1) befestigten Stecker in den Anschlusskasten einzudringen.

6. Motorkreiselpumpe nach einem der vorherigen Ansprüche, **dadurch gekennzeichnet, dass** der Kontaktblock (8) in achsparalleler Richtung zur Motorenachse in dem Stecker (4) eingesteckt ist.

7. Motorkreiselpumpe nach einem der vorherigen Ansprüche, **dadurch gekennzeichnet, dass** der Stecker (4) in achsparalleler Richtung zur Motorenachse in dem Anschlusskasten (1) eingesteckt ist.

8. Motorkreiselpumpe nach einem der vorherigen Ansprüche, **dadurch gekennzeichnet, dass** der Stecker (4) formschlüssig im Anschlusskasten (1) einliegt.

9. Motorkreiselpumpe nach einem der vorherigen Ansprüche, **dadurch gekennzeichnet, dass** der Stecker (4) mit mindestens 50 Prozent seines Volumens innerhalb des Anschlusskastens (1) insbesondere formschlüssig einliegt.

10. Motorkreiselpumpe nach einem der vorherigen Ansprüche, **dadurch gekennzeichnet, dass** der Stecker (4) gegen den Druck eines Federelementes in den Anschlusskasten (1) bis zur Kontaktstellung eingeschoben und in der Kontaktstellung durch ein Halteelement (11) gehalten ist.

11. Motorkreiselpumpe nach Anspruch 10, **dadurch gekennzeichnet, dass** das Halteelement eine Schraube (11) oder ein lösbares Rastelement ist.

12. Motorkreiselpumpe nach einem der vorherigen Ansprüche, **dadurch gekennzeichnet, dass** der Innenraum des Steckers (4) von einem Deckel (10) verschlossen ist, durch den die den Stecker am Anschlusskasten (1) haltende Schraube verläuft.

13. Motorkreiselpumpe nach einem der vorherigen Ansprüche, **dadurch gekennzeichnet, dass** die Kabel am Stecker (4) jeweils durch eine Klemmeinrichtung zugfest gehalten sind.

14. Motorkreiselpumpe nach einem der vorherigen Ansprüche, **dadurch gekennzeichnet, dass** die Kabelenden mit ihrem Kabelmantel jeweils in einem am Stecker (4) angeformten hohlen Anschlussstutzen (5) einliegen, wobei über dem Anschlussstutzen eine Überwurfmutter (14) liegt, die außen auf den Kabelmantel eine Klemmkraft ausübt.

15. Motorkreiselpumpe nach Anspruch 14, **dadurch gekennzeichnet, dass** auf dem Kabelmantel ein koaxialer Klemmring (12) liegt, der Klemmnocken, Klemmfinger oder Klemmkrallen aufweist und durch die Überwurfmutter gegen einen im Anschlussstutzen (5) befindlichen Innenkonus bewegt wird, um die Klemmnocken, Klemmfinger oder Klemmkrallen gegen den Kabelmantel zu drücken.

16. Motorkreiselpumpe nach einem der vorherigen Ansprüche, **dadurch gekennzeichnet, dass** der Stecker (4) entlang einer Trennebene in einen oberen und einen unteren Bereich (4a, 4b) insbesondere zwei Hälften geteilt ist, wobei der untere Bereich (4b) den Anschlusskasten (1) insbesondere mit seinem/seinen Kontaktblock/Kontaktblöcken (8) kontaktiert.

17. Motorkreiselpumpe nach Anspruch 16, **dadurch gekennzeichnet, dass** die Trennebene mittig durch die Anschlussstutzen (5) derart verläuft, dass die Stutzenachsen in der Trennebene liegen.

18. Motorkreiselpumpe nach Anspruch 16 oder 17, **dadurch gekennzeichnet, dass** die obere Hälfte (4a) des Steckers (4) an der unteren Hälfte (4b) angelenkt ist, wobei die Gelenkstelle auf der dem Anschlußstutzen (5) abgewandten Seite des Steckers liegt.

19. Motorkreiselpumpe nach einem der vorherigen Ansprüche, **dadurch gekennzeichnet, dass** die die beiden Steckerhälften (4a, 4b) durchdringende Schraube (11) nach unten über die Unterseite des unteren Bereits (4b) hinaussteht und in eine Gewindebohrung des Anschlusskastens (1) eindringt, wobei im in der Gewindebohrung eingeschraubtem Zustand die Kontakte des Steckers (4) und/oder des Kontaktblockes/der Kontaktblöcke (8) mit den Gegenkontakten des Anschlusskastens (1) kontaktieren.

## Claims

1. Motorized rotary pump having a terminal box (1) which has electronic components, is fastened to the motor, and to which electric cables (6, 7) lead, a box-shaped plug (4) being plugged releasably to the terminal box (11), which plug (4) forms an inner clamping space, into which the electric cables (6) are guided and in which they are connected, and a power supply cable (6) and a signal cable (7) which transmits signals as a control line being connected to the plug (4), **characterized in that** at least one separate contact block (8) is inserted into the clamping space of the plug (4), to which contact block (8) conductors of the power supply cable (6) and the signal cable (7) are fastened such that they make contact.

2. Motorized rotary pump according to Claim 1, **characterized in that** the plug (4) lies partially or completely within the terminal box (1).

3. Motorized rotary pump according to Claim 2, **characterized in that** the plug (4) is enclosed partially or completely by the terminal box (1).

4. Motorized rotary pump according to one of the preceding claims, **characterized in that** the contact block (8) has a projecting, in particular integrally moulded cable connector (9) which, when the plug (4) is plugged in, makes contact by way of its contacts with counter-contacts of the electronics board of the terminal box (1).

5. Motorized rotary pump according to Claim 4, **characterized in that** the cable connector projects on the underside of the plug (4), in order to penetrate into the terminal box when the plug is fastened to the terminal box (1).

6. Motorized rotary pump according to one of the preceding claims, **characterized in that** the contact block (8) is plugged into the plug (4) in an axially parallel direction with respect to the motor axis.

7. Motorized rotary pump according to one of the preceding claims, **characterized in that** the plug (4) is plugged into the terminal box (1) in an axially parallel direction with respect to the motor axis.

8. Motorized rotary pump according to one of the preceding claims, **characterized in that** the plug (4) lies in the terminal box (1) in a positively locking manner.

9. Motorized rotary pump according to one of the preceding claims, **characterized in that** at least 50% of the volume of the plug (4) lies within the terminal box (1), in particular in a positively locking manner.

10. Motorized rotary pump according to one of the preceding claims, **characterized in that** the plug (4) is pushed into the terminal box (1) as far as the contact position counter to the pressure of a spring element, and is held in the contact position by way of a holding element (11).

11. Motorized rotary pump according to Claim 10, **characterized in that** the holding element is a bolt (11) or a releasable latching element.

12. Motorized rotary pump according to one of the preceding claims, **characterized in that** the interior space of the plug (4) is closed by a cover (10), through which the screw which holds the plug on the terminal box (1) runs.

13. Motorized rotary pump according to one of the preceding claims, **characterized in that** the cables are held on the plug (4) in each case by way of a clamping device such that they are fixed against pulling.

14. Motorized rotary pump according to one of the preceding claims, **characterized in that** the cable ends lie with their cable sheath in each case in a hollow connector piece (5) which is formed integrally on the plug (4), a union nut (14) lying above the connector piece, which union nut (14) exerts a clamping force on the outside of the cable sheath.

15. Motorized rotary pump according to Claim 14, **characterized in that** a coaxial clamping ring (12) lies on the cable sheath, which clamping ring (12) has clamping cams, clamping fingers or clamping claws and is moved by way of the union nut against an inner cone which is situated in the connector piece (5), in order to press the clamping cams, clamping figures or clamping claws against the cable sheath.

16. Motorized rotary pump according to one of the preceding claims, **characterized in that** the plug (4) is divided into an upper and a lower region (4a, 4b), in particular two halves, along a dividing plane, the lower region (4b) making contact with the terminal box (1), in particular by way of its contact block(s) (8).

17. Motorized rotary pump according to Claim 16, **characterized in that** the dividing plane runs centrally through the connector pieces (5) in such a way that the piece axes lie in the dividing plane.

18. Motorized rotary pump according to Claim 16 or 17, **characterized in that** the upper half (4a) of the plug (4) is articulated on the lower half (4b), the articulation point lying on that side of the plug which faces away from the connector piece (5).

19. Motorized rotary pump according to one of the preceding claims, **characterized in that** the bolt (11) which penetrates the two plug halves (4a, 4b) projects downwards beyond the underside of the lower region (4b) and penetrates into a threaded bore of the terminal box (1), the contacts of the plug (4) and/or the contact block(s) (8) making contact with the counter-contacts of the terminal box (1) in the state in which said bolt (11) is screwed into the threaded bore.

## Revendications

1. Pompe centrifuge à moteur avec une boîte de jonction (1) fixée au moteur et présentant des composants électroniques, et jusqu'à laquelle sont acheminés des câbles (6, 7) électriques,
selon laquelle un connecteur mâle (4) en forme de caisson est enfiché de manière amovible au niveau de la boîte de jonction (11), lequel connecteur mâle (4) forme un compartiment de serrage interne, dans lequel les câbles (6) électriques sont insérés et raccordés ; et
selon laquelle un câble d'alimentation en courant (6) et un câble de signal (7), lequel transmet des signaux et se présente sous la forme d'un câble de commande, sont raccordés au connecteur mâle (4),
**caractérisée en ce que**
au moins un bloc à contact (8) séparé est mis en place dans le compartiment de serrage du connecteur mâle (4), au niveau duquel bloc à contact sont fixés des conducteurs du câble d'alimentation en courant (6) et du câble de signal (7), de manière à établir une mise en contact.

2. Pompe centrifuge à moteur selon la revendication 1, **caractérisée en ce que** le connecteur mâle (4) est logé, en partie ou en intégralité, à l'intérieur de la boîte de jonction (1).

3. Pompe centrifuge à moteur selon la revendication 2, **caractérisée en ce que** le connecteur mâle (4) est enfermé, en partie ou en intégralité, par la boîte de jonction (1).

4. Pompe centrifuge à moteur selon l'une des revendications précédentes, **caractérisée en ce que** le bloc à contact (8) présente un connecteur pour câble (9), lequel fait saillie, est en particulier moulé et lequel réalise la mise en contact des contre-contacts de la platine électronique de la boîte de jonction (1) avec ses contacts, quand le connecteur mâle (4) est enfiché.

5. Pompe centrifuge à moteur selon la revendication 4, **caractérisée en ce que** le connecteur pour câble fait saillie au niveau de la face inférieure du connecteur mâle (4) en vue de pénétrer dans la boîte de jonction quand le connecteur mâle est fixé à la boîte de jonction (1) .

6. Pompe centrifuge à moteur selon l'une des revendications précédentes, **caractérisée en ce que** le bloc à contact (8) est enfiché dans le connecteur mâle (4), dans une direction parallèle à l'axe par rapport à l'axe du moteur.

7. Pompe centrifuge à moteur selon l'une des revendications précédentes, **caractérisée en ce que** le connecteur mâle (4) est enfiché dans la boîte de jonction (1), dans une direction parallèle à l'axe par rapport à l'axe du moteur.

8. Pompe centrifuge à moteur selon l'une des revendications précédentes, **caractérisée en ce que** le connecteur mâle (4) est logé par assemblage de forme dans la boîte de jonction (1).

9. Pompe centrifuge à moteur selon l'une des revendications précédentes, **caractérisée en ce que** le connecteur mâle (4) est logé, en particulier par assemblage de forme, avec au moins 50 % de son volume se trouvant à l'intérieur de la boîte de jonction (1).

10. Pompe centrifuge à moteur selon l'une des revendications précédentes, **caractérisée en ce que** le connecteur mâle (4) est introduit dans la boîte de jonction (1) jusqu'à la position de mise en contact, contre la pression d'un élément formant ressort, et est maintenu dans cette position de mise en contact par un élément de retenue (11).

11. Pompe centrifuge à moteur selon la revendication 10, **caractérisée en ce que** l'élément de retenue est une vis (11) ou un élément à cran amovible.

12. Pompe centrifuge à moteur selon l'une des revendications précédentes, **caractérisée en ce que** le compartiment intérieur du connecteur mâle (4) est verrouillé par un couvercle (10), à travers lequel passe la vis qui maintient le connecteur mâle au niveau de la boîte de jonction (1).

13. Pompe centrifuge à moteur selon l'une des revendications précédentes, **caractérisée en ce que** les câbles sont maintenus respectivement au niveau du connecteur mâle (4), d'une manière résistant à la traction, par l'intermédiaire d'un mécanisme de serrage.

14. Pompe centrifuge à moteur selon l'une des revendications précédentes, **caractérisée en ce que** les extrémités de câble sont enfichées respectivement avec leur gaine de câble dans une tubulure de raccordement (5) creuse, moulée sur le connecteur mâle (4), selon laquelle un écrou de raccord (14) se trouve au-dessus de la tubulure de raccordement, lequel exerce de manière externe une force de serrage sur la gaine de câble.

15. Pompe centrifuge à moteur selon la revendication 14, **caractérisée en ce qu'**une bague de serrage (12) coaxiale se trouve sur la gaine de câble, laquelle bague de serrage présente des gâchettes à picots, des languettes de serrage ou des griffes de serrage et à travers laquelle l'écrou de raccord est déplacé contre un cône intérieur qui se trouve dans la tubulure de raccordement (5), en vue de presser les gâchettes à picots, les languettes de serrage ou les griffes de serrage contre la gaine de câble.

16. Pompe centrifuge à moteur selon l'une des revendications précédentes, **caractérisée en ce que** le connecteur mâle (4) est divisé en une zone supérieure et en une zone inférieure (4a, 4b), en particulier en deux moitiés, le long d'un espace de séparation, selon laquelle la zone inférieure (4b) réalise la mise en contact de la boîte de jonction (1), en particulier avec son ou ses blocs à contact (8).

17. Pompe centrifuge à moteur selon la revendication 16, **caractérisée en ce que** l'espace de séparation se trouve au centre de la tubulure de raccordement (5), de telle sorte que les axes de la tubulure se situent dans l'espace de séparation.

18. Pompe centrifuge à moteur selon la revendication 16 ou 17, **caractérisée en ce que** la moitié supérieure (4a) du connecteur mâle (4) est articulée au niveau de la moitié inférieure (4b), selon laquelle le point d'articulation se situe sur la face du connecteur mâle qui se trouve à l'opposé de la tubulure de raccordement (5) .

19. Pompe centrifuge à moteur selon l'une des revendications précédentes, **caractérisée en ce que** la vis (11) qui traverse les deux moitiés du connecteur mâle (4a, 4b) fait saillie vers le bas par la face inférieure de la moitié inférieure (4b) et pénètre dans un trou fileté de la boîte de jonction (1), selon laquelle les contacts du connecteur mâle (4) et/ou du ou des blocs à contact (8) sont mis en contact avec les contre-contacts de la boîte de jonction (1), à l'état vissé dans le trou fileté.
